# EUROPÄISCHE PATENTANMELDUNG

(11) **EP 2 733 837 A1**
(43) Veröffentlichungstag der Anmeldung: **21.05.2014**
(21) Anmeldenummer: 12192990.5
(22) Anmeldetag: 16.11.2012
(51) Int. Cl.: H02M 1/36, H02M 7/487

(54) **Umrichter**

(71) Anmelder: ABB Technology AG, 8050 Zürich (CH)
(72) Erfinder: Zuckerberger, Adrian, 5417 Untersiggenthal (CH); Fritschy, Jonas, 5200 Brugg (CH)
(74) Vertreter: ABB Patent Attorneys

(57) **Zusammenfassung**

Es wird ein Umrichter (10) mit einem Gleichspannungszwischenkreis (14) und zumindest einem mit dem Gleichspannungszwischenkreis (14) elektrisch verbundenen Phasenmodul (24) mit einem davon abgehenden Phasenleiter (Lu) beschrieben. Der Gleichspannungszwischenkreis (14) weist einen positiven Potentialanschluss (+V_{DC}), einen negativen Potentialanschluss (-V_{DC}) und einen Mittelpunktanschluss (NP) auf. Zwischen dem positiven Potentialanschluss (+V_{DC}) und dem Mittelpunktanschluss (NP) ist ein erster Energiespeicher (16) und zwischen dem Mittelpunktanschluss (NP) und dem negativen Potentialanschluss (-V_{DC}) ein zweiten Energiespeicher (18) angeschlossen. Der Phasenleiter (Lu) ist über eine erste Diode (35') mit dem positiven Potentialanschluss (+V_{DC}), und über ein zweite Diode (36') mit dem negativen Potentialanschluss (-V_{DC}) verbunden. Erfindungsgemäss weisst der Umrichter weiter eine Energieversorgung (60) zum Aufladen des ersten Energiespeichers (16) und des zweiten Energiespeichers (18) auf. Die Energieversorgung (60) ist einerseits mit dem Mittelpunktanschluss (NP) und andererseits mit dem Phasenleiter (Lu) über einen Schalter (62) verbunden.

## Beschreibung

Die vorliegende Erfindung bezieht dich auf das Gebiet der Umrichter, insbesondere auf Umrichter gemäss dem Oberbegriff von Anspruch 1. Weiter betrifft die vorliegende Erfindung ein Verfahren zum Betreiben eines Umrichters gemäss dem Oberbegriff von Anspruch 7.

Derartig Umrichter sind dem Fachmann bestens bekannt und weisen insbesondere einen Gleichspannungszwischenkreis und einen Wechselrichter auf. Die im Gleichspannungszwischenkreis enthaltenen Kondensatoren bzw. Energiespeicher müssen, damit diese nicht beschädigt werden, aufgeladen werden, bevor der Gleichrichter des Umrichters mit dem Versorgungsnetz verbunden wird, da ansonsten die Kondensatoren im Gleichspannungszwischenkreis Schaden nehmen könnten beziehungsweise für eine derartige Belastung ausgelegt sein müssen.

Ebenso hat sich gezeigt, dass die Kondensatoren in den jeweiligen Phasenmodulen des Wechselrichters aus ihrem zunächst komplett entladenen Zustand behutsam aufgeladen werden müssen, damit diese im Betrieb keinen Schaden nehmen beziehungsweise nicht für grosse anfängliche Belastungen ausgelegt sein müssen.

Aufgabe der Erfindung ist es folglich einen Umrichter anzugeben, der ein behutsames Aufladen des Gelichspannungszwischenkreises ermöglicht. Weiter soll ein Verfahren zum Betreiben eines derartigen Umrichters angegeben werden.

Erfindungsgemäss wird auf Aufgabe durch den Umrichter gemäss Anspruch 1 und durch ein Verfahren gemäss Anspruch 7 gelöst.

Erfindungsgemäss weist der Umrichter einen Gleichspannungszwischenkreis und zumindest ein mit dem Gleichspannungszwischenkreis elektrisch verbundenes Phasenmodul mit einem davon abgehenden Phasenleiter auf, wobei der Gleichspannungszwischenkreis (14) einen positiven Potentialanschluss, einen negativen Potentialanschluss und einen Mittelpunktanschluss aufweist und zwischen dem positiven Potentialanschluss und dem Mittelpunktanschluss ein erster Energiespeicher und zwischen dem Mittelpunktanschluss und dem negativen Potentialanschluss ein zweiten Energiespeicher angeschlossen ist, wobei der Phasenleiter über eine erste Diode mit dem positiven Potentialanschluss, und über ein zweite Diode mit dem negativen Potentialanschluss verbunden ist, und wobei der Umrichter weiter eine Energieversorgung zum Aufladen des ersten Energiespeichers und des zweiten Energiespeichers aufweist, welche Energieversorgung einerseits mit dem Mittelpunktanschluss und andererseits mit dem Phasenleiter über einen Schalter verbunden ist.

Der erfindungsgemässe Umrichter weist folglich die Energieversorgung auf, die zum Aufladen des ersten Energiespeichers und des zweiten Energiespeichers bestimmt ist. Die Energieversorgung ermöglicht ein äusserst einfaches Aufladen des ersten Energiespeichers wie auch des zweiten Energiespeichers. Zum Aufladen des ersten Energiespeichers und des zweiten Energiespeichers ist folglich ein Gleichrichter nicht notwendig.

Gemäss einer bevorzugten Ausführungsform des Umrichters ist die Energieversorgung durch einen Transformator ausgebildet, wobei der Transformator auf seiner sekundären Seite einphasig ausgebildet ist und auf seiner primären Seite mit einem Versorgungsnetz verbindbar ist.

Diese bevorzugte Ausführungsform des Umrichters ermöglicht ein besonders einfaches Aufladen des ersten Energiespeichers und des zweiten Energiespeichers. Es wird lediglich die erste Diode und die zweite Diode des Phasenmoduls benötigt.

Gemäss einer bevorzugten Ausführungsform des Umrichters sind in einem ersten Stromkreis der erste Energiespeicher über den Mittelpunktanschluss mit der Energieversorgung, diese Energieversorgung über den Phasenleiter mit der erste Diode und diese erste Diode mit dem positiven Potentialanschluss in Serie verbunden sind. Weiter sind in einem zweiten Stromkreis der zweite Energiespeicher über den negative Potentialanschluss mit der zweiten Diode und diese zweite Diode über den Phasenleiter mit der Energieversorgung in Serie verbunden sind.

Diese bevorzugte Ausführungsform des Umrichters ermöglicht das besonders einfache Aufladen des ersten Energiespeichers und des zweiten Energiespeichers.

Gemäss einer bevorzugen Ausführungsform des Umrichters ist die erste Diode durch einen bidirektionalen Halbleiterschalter mit gesteuerter unidirektionaler Stromführungsrichtung ausgebildet, und/oder ist die zweite Diode durch einen bidirektionalen Halbleiterschalter mit gesteuerter unidirektionaler Stromführungsrichtung ausgebildet ist.

Diese bevorzugte Ausführungsform des Umrichters ermöglicht im Vergleich zu herkömmlichen Umrichtern, welche typischerweise bidirektionalen Halbleiterschalter mit gesteuerter unidirektionaler Stromführungsrichtung aufweisen, eine besonders einfache Ausgestaltung der Erfindung, da ausser der Energieversorgung keine wesentlichen neuen Elemente für den erfindungsgemässen Umrichter notwendig sind.

Gemäss einer bevorzugten Ausführungsform des Umrichters weist das zumindest eine Phasenmodul einen dem Phasenmodul zugeordnete, weiteren Energiespeicher auf, welcher einerseits über einen zweiten, bidirektionalen Halbleiterschalter mit gesteuerter unidirektionaler Stromführungsrichtung mit dem Mittelpunktanschluss und über die erste Diode mit dem Phasenleiter verbunden ist, und andererseits über einen ersten, bidirektionalen Halbleiterschalter mit gesteuerter unidirektionaler Stromführungsrichtung mit dem Mittelpunktanschluss und über die zweite Diode mit dem Phasenleiter verbunden ist.

Bei dieser bevorzugte Ausführungsform des Umrichters ermöglicht wiederum die Energieversorgung ein besonders einfaches Aufladen des weiteren Energiespeichers des Phasenmoduls.

Gemäss einer weiteren bevorzugten Ausführungsform des Umrichters ist der dem Phasenmodul zugeordnete, weitere Energiespeicher in einem dritten Stromkreis in Serie mit dem ersten, bidirektionalen Halbleiterschalter, der Energieversorgung und der ersten Diode angeschlossen, und in einem vierten Stromkreis ist der weitere Energiespeicher in Serie mit der zweiten Diode, der Energieversorgung und dem zweiten, bidirektionalen Halbleiterschalter angeschlossen.

Diese Schaltung ermöglicht ein effizientes Aufladen des weiteren Energiespeichers mittels der Energieversorgung.

Erfindungsgemäss wird der erfindungsgemässe Umrichter wie folgt betrieben:
- Beaufschlagen der Energieversorgung mit einer Wechselspannung,
- Schliessen des Schalters,
- Aufladen des ersten Energiespeichers mit einer ersten Halbwelle des Stroms der Energieversorgung und
- Aufladen des zweiten Energiespeichers mit einer zweiten Halbwelle des Stroms der Energieversorgung,
wobei der Umrichter einen Gleichspannungszwischenkreis und ein mit dem Gleichspannungszwischenkreis elektrisch verbundenes Phasenmodul mit einem davon abgehenden Phasenleiter aufweist, wobei der Gleichspannungszwischenkreis zumindest einen positiven Potentialanschluss, einen negative Potentialanschluss und einen Mittelpunktanschluss aufweist und zwischen dem positiven Potentialanschluss und dem Mittelpunktanschluss ein ersten Energiespeicher und zwischen dem Mittelpunktanschluss und dem negativen Potentialanschluss einen zweiten Energiespeicher aufweist, wobei der Phasenleiter über eine erste Diode mit dem positiven Potentialanschluss, und über eine zweite Diode mit dem negativen Potentialanschluss verbunden ist, und wobei der Umrichter weiter eine Energieversorgung aufweist, welche einerseits mit dem Mittelpunktanschluss und andererseits mit dem Phasenleiter über einen Schalter verbindbar ist.

Dieses erfindungsgemässe Verfahren ermöglicht ein einfaches Laden des ersten Energiespeichers und des zweiten Energiespeichers mittels der Energieversorgung.

Gemäss einer bevorzugen Ausführungsform der Erfindung weist das Phasenmodul ein dem Phasenmodul zugehörigen weiteren Energiespeicher auf, der einerseits über die erste Diode mit dem Phasenleiter und über einen zweiten Halbleiterschalter mit gesteuert unidirektionaler Stromführungsrichtung mit dem Mittelpunktanschluss verbunden ist und andererseits über die zweite Diode mit dem Phasenleiter und über einen ersten Halbleiterschalter mit gesteuert unidirektionaler Stromführungsrichtung mit dem Mittelpunkanschluss verbunden ist, wobei das Verfahren folgende weitere Schritte aufweist
- Schliessen zumindest eines des ersten Halbleiterschalters und des zweiten Halbleiterschalters
- Aufladen des zum Phasenmodul zugehörigen weiteren Energiespeichers mittels der Energieversorgung.

Dieses bevorzugte Verfahren ermöglicht ein einfaches Aufladen des weiteren Energiespeichers des Phasenmoduls.

Gemäss einer bevorzugten Ausführungsform der Erfindung wird der zum Phasenmodul zugehörigen weiteren Energiespeicher parallel zum Aufladen des ersten Energiespeichers und des zweiten Energiespeichers aufgeladen.

Dieses bevorzugte Verfahren ermöglicht ein schnelles wie auch sicheres Aufladen des weiteren Energiespeichers.

Gemäss einer bevorzugten Ausführungsform der Erfindung wird der erste Halbleiterschalters und der zweite Halbleiterschalter geschlossen, und der zum Phasenmodul zugehörige weiteren Energiespeichers mittels der positive und negativen Halbwelle der Energieversorgung aufgeladen.

Diese bevorzuge Verfahren ermöglicht ein effizientes Aufladen des weiteren Energiespeichers mittels einer Wechselspannungsquelle, beispielsweise einem Transformator, der an ein Niederspannungsversorgungsnetz angeschossen ist.

Gemäss einem weiteren bevorzugten Ausführungsform der Erfindung ist das zumindest eine Phasenmodul ein erstes Phasenmodul und der Umrichter (10) weist ein zweites Phasenmodul auf, wobei das zweite Phasenmodul einen dem zweiten Phasenmodul zugehörigen, weiteren Energiespeicher aufweist, der einerseits über eine erste Diode des zweiten Phasenmoduls mit einem weiteren Phasenleiter und über einen zweiten Halbleiterschalter mit gesteuert unidirektionaler Stromführungsrichtung des zweiten Phasenmoduls mit dem positiven Potentialanschluss verbunden ist und andererseits über eine zweite Diode des zweiten Phasenmoduls mit dem weiteren Phasenleiter und über einen ersten Halbleiterschalter mit gesteuert unidirektionaler Stromführungsrichtung des zweiten Phasenmoduls mit dem negativen Potentialanschluss verbunden ist, wobei das Verfahren folgende weitere Schritte aufweist
- Schliessen des ersten Halbleiterschalters des zweiten Phasenmoduls und des zweiten Halbleiterschalters des zweiten Phasenmoduls
- Aufladen des zum zweiten Phasenmodul zugehörigen weiteren Energiespeichers mittels des ersten Energiespeichers und des zweiten Energiespeichers des Gleichspannungszwischenkreises.

Dieses Verfahren ermöglicht ein einfaches Laden eines weiteren Energiespeichers in einem zweiten Phasenmodul des Umrichters.

Gemäss einer bevorzugten Ausführungsform der Erfindung wird der zum zweiten Phasenmodul zugehörigen weiteren Energiespeichers parallel zum Aufladen des ersten Energiespeichers und des zweiten Energiespeichers aufgeladen.

Dieses bevorzugte Verfahren ermöglicht ein schnelles wie auch sicheres Aufladen des weiteren Energiespeichers des zweiten Phasenmoduls.

Gemäss einer bevorzugten Ausführungsform der Erfindung weist des Verfahren folgende weitere Schritte auf:
- Verbinden des ersten Phasenleiters mit dem zweiten Phasenleiter,
- Öffnen des ersten Halbleiterschalters des ersten Phasenmoduls,
- Öffnen des zweiten Halbleiterschalters des zweiten Phasenmoduls,
- Schlissen des zweiten Halbeiterschalters des ersten Phasenmoduls ,
- Schlissen des ersten Halbeiterschalters des zweiten Phasenmoduls,
- Aufladen des weiteren Energiespeichers des ersten Phasenmoduls und des weiteren Energiespeichers des zweiten Phasenmoduls.

Dieses Verfahren ermöglicht es den weiteren Energiespeicher des ersten Phasenmoduls und den weiteren Energiespeicher des zweiten Phasenmoduls mittels des Gleichspannungszwischenkreises zu Laden beziehungsweise die Ladung im weiteren Energiespeicher des ersten Phasenmoduls und des weiteren Energiespeichers des zweiten Phasenmoduls zu erhalten. Beispielsweise kann der Gleichspannungszwischenkreis wie oben beschrieben geladen werden oder, falls die Ladung im Gleichspannungszwischenkreis nur aufrecht zu halten ist, kann dies über den Gleichrichter des Umrichters erzielt werden.

Weitere bevorzugte Ausführungsformen der Erfindung sind in den weiteren abhängigen Patentansprüche angegeben und ergeben sich aus der Beschreibung bevorzugten Ausführungsformen.

Bevorzugte Ausführungsformen der vorliegenden Erfindung werden in exemplarischer Weise mit Bezug auf die angehängten Zeichnungen beschrieben. Diese bevorzugten Ausführungsformen der Erfindung stellen nicht einschränkende Beispiele der Erfindung dar.

Die Zeichnung zeigt rein schematisch
Fig. 1 einen Umrichter, welcher einerseits an ein Versorgungsnetz angeschlossen ist und andererseits an eine Last, wobei weiter eine Energieversorgung an den Umrichter angeschlossen ist;
Fig. 2 eine Detailansicht des Umrichters aus Fig 1; und
Fig. 3 ein Phasenmodul des Umrichters.

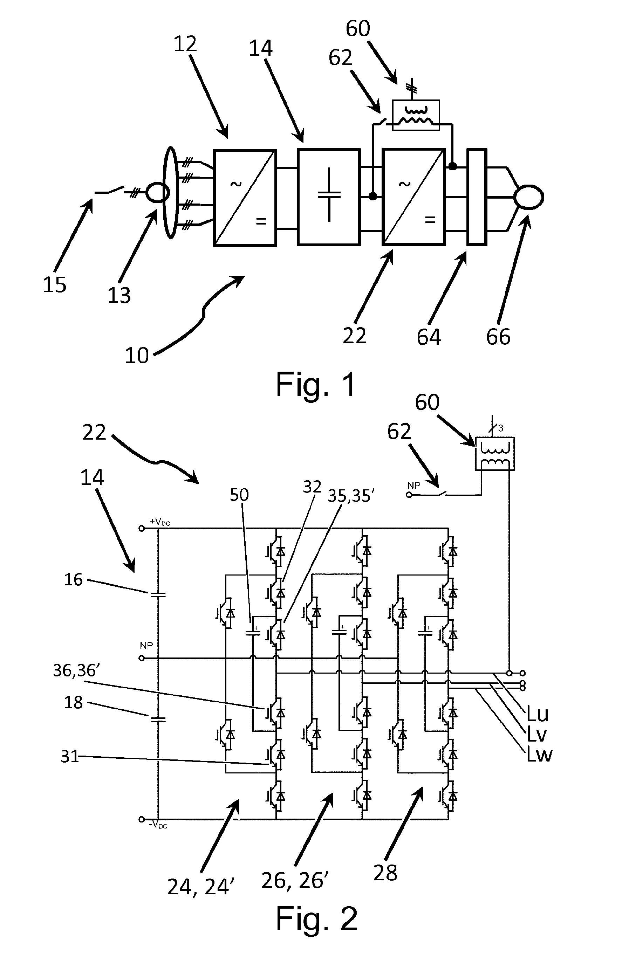

FIG. 1 zeigt einen Umrichter 10. Dieser weist netzseitig einen bekannten Gleichrichter 12 auf, der beispielhaft als Diodengleichrichter ausgebildet ist. Der gezeigte Gleichrichter 12 ist als 24-Puls-Gleichrichter ausgeführt. Andere Ausführungen sind ebenfalls möglich. Der Gleichrichter 12 ist über einen Transformator 13 und einen Schalter mit dem Versorgungsnetz 15 verbunden. Das Versorgungsnetz kann beispielsweise ein Mittelspannungsversorgungsnetz sein und weist beispielsweise eine Spannung zwischen 1 kV und 30 kV, bevorzugt zwischen 5 kV und 10 kV auf und ist dreiphasig ausgeführt. Gleichspannungsseitig ist der Gleichrichter 12 mit einem Gleichspannungszwischenkreis 14 verbunden.

Wie in Fig. 1 und Fig. 2 gezeigt, weist der Gleichspanungszwischenkreis 14 einen positiven Potentialanschluss +V_{DC} und einen negative Potentialanschluss -V_{DC} auf. Im Gleichspannungszwischenkreis 14 sind zwischen dem positiven Potentialanschluss +V_{DC} und dem negativen Potentialanschluss -V_{DC} ein erster Energiespeicher 16 und ein zweiter Energiespeicher 18 in Serie zueinander angeordnet. Der Mittelpunk zwischen dem ersten Energiespeicher 16 und dem zweiten Energiespeicher 18 bildet einen Mittelpunktanschluss NP.

Typischerweise sind der erste Energiespeicher 16 und der zweite Energiespeicher 18 je durch einen Kondensator oder durch mehrere Kondensatoren ausgebildet.

An den Gleichspannungszwischenkreis 14 ist ein Wechselrichter 22 angeschlossen, welcher durch den Gleichspannungszwischenkreis 14 gespeist wird. Der gezeigte Wechselrichter 22 ist dreiphasig ausgebildet, könnte jedoch auch zweiphasig oder mehr als dreiphasig ausgebildet sein. Für jede Phase u,v,w weist der Wechselrichter 22 ein Phasenmodul 24, 26, 28 auf, welches eingangsseitig mit dem Gleichspannungszwischenkreis 14 verbunden ist und ausgangsseitig einen Phasenleiter Lu, Lv, Lw aufweist, der schaltbar zumindest mit dem positiven Potentialanschluss +V_{DC}, dem Mittelpunkanschluss NP oder dem negativen Potentialanschluss -V_{DC} verbindbar ist.

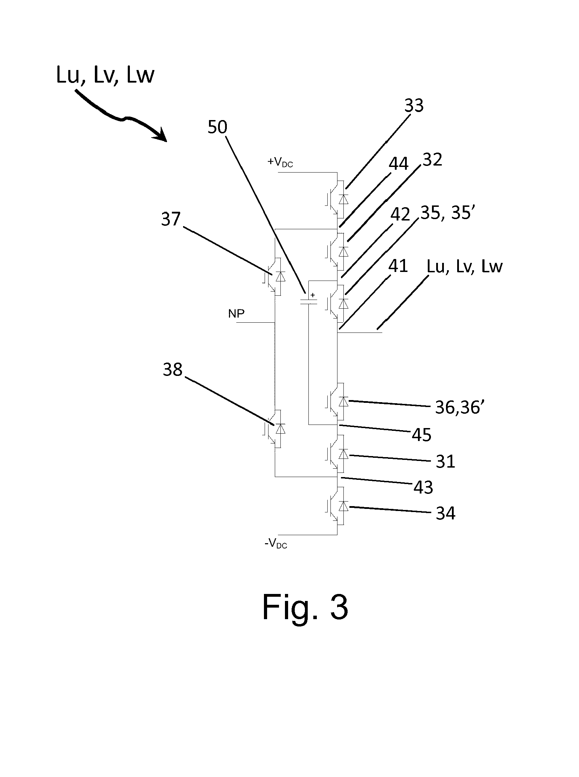

Wie Fig. 3 im Detail zeigt und auch aus Fig. 2 hervorgeht, weist jedes Phasenmodul 24, 26, 28 sechs in Serie geschaltete bidirektionale Halbleiterschalter 31, 32, 33, 34, 35, 36 mit gesteuerter unidirektionaler Stromführungsrichtung auf, welche folglich an fünf Sternpunkten 41, 42, 43, 44, 45 miteinander verbunden sind.

Der dritte Halbleiterschalter 33 ist einerseits mit dem positiven Spannungspotential +V_{DC} und dem vierten Sternpunkt 44 verbunden. Der zweite Halbleiterschalter 32 ist einerseits mit dem vierten Sternpunkt 44 und andererseits mit dem zweiten Sternpunkt 42 verbunden. Der fünfte Halbleiterschalter 35 ist einerseits mit dem zweiten Sternpunkt 42 und andererseits mit dem ersten Sternpunkt 41 verbunden. Der sechste Halbleiterschalter 36 ist einerseits mit dem ersten Sternpunkt 41 und andererseits mit dem fünften Sternpunkt 45 verbunden. Der erste Halbleiterschalter 31 ist einerseits mit dem fünften Sternpunkt 45 und andererseits mit dem dritten Sternpunkt 43 verbunden. Der vierte Halbleiterschalter 34 ist einerseits mit dem dritten Sternpunkt 43 und andererseits mit dem negativen Potentialanschluss -V_{DC} verbunden.

Der fünfte bidirektionale Halbleiterschalter 35 mit gesteuerter unidirektionaler Stromführungsrichtung weist eine erste Diode 35' auf. Diese kann beispielsweise antiparallel zu einem IGBT ausgeführt oder durch eine in einen Halbleiterschalter integrierte Diode ausgebildet sein.

Der sechste bidirektionale Halbleiterschalter 36 mit gesteuerter unidirektionaler Stromführungsrichtung weist eine zweite Diode 36' auf. Diese kann beispielsweise antiparallel zu einem IGBT ausgeführt oder durch eine in einen Halbleiterschalter integrierte Diode ausgebildet sein.

Weiter weist jedes Phasenmodul 24, 26, 28 zwischen dem zweiten Sternpunkt 42 und dem fünften Sternpunkt 45 einen weiteren Energiespeicher 50 auf. Weiter ist der vierte Sternpunkt 44 über einen siebten bidirektionale Halbleiterschalter 37 mit gesteuerter unidirektionaler Stromführungsrichtung in Richtung zum Mittelpunktanschlusses NP hin mit dem Mittelpunktanschluss NP verbunden. Der Mittelpunktanschluss NP ist über einen achten bidirektionale Halbleiterschalter 38 mit gesteuerter unidirektionaler Stromführungsrichtung in Richtung zum dritten Sternpunktes 43 hin mit dem dritten Sternpunkt 43 verbunden.

Weiter ist der erste Sternpunkt 41 des Phasenmoduls 24 zur Phase u mit dem zugehörigen Phasenleiter Lu, der erste Sternpunkt 41 des Phasenmoduls 26 zur Phase v mit dem zugehörigen Phasenleiter Lv und der erste Sternpunkt 41 des Phasenmoduls 28 zur Phase w mit dem Phasenleiter Lw verbunden.

Wie in Fig. 1 und 2 gezeigt, weist der Umrichter 10 erfindungsgemäss eine Energieversorgung 60 auf, welche zwischen dem Mittelpunktanschluss NP und einem der Phasenleiter Lu, Lv, Lw angeordet ist, beispielsweise dem Phasenleiter Lu. Im Verbindungsleiter zwischen dem Mittelpunktanschluss NP und der Energieversorgung 60 ist ein Schalter 62 angeordnet, welcher jedoch auch zwischen der Energieversorgung 60 und dem Phasenleiter Lu sein könnte. Beispielsweise kann der Schalter 62 durch ein Hochspannungsrelais ausgebildet sein. Im vorliegenden Beispiel ist die Energieversorgung 60 durch einen auf der Primärseite dreiphasig ausgebildeten Transformator ausgebildet, der sekundärseitig einphasig ist. Alternativ kann jede beliebige Wechselspannungsquelle verwendet werden, wie zum Beispiel ein Niederspannungsumrichter. Die Energiequelle 60 kann beispielsweise durch ein Niederspannungsnetz gespeist werden, welches typischerweise eine Spannung bis zu 1000 V aufweist, insbesondere zwischen 380 V und 690 V.

Wie in Fig. 1 gezeigt, kann am Ausgang des Wechselrichters 22 ein bekanntes Filter 64 vorhanden sein. Ausgangsseitig ist am Wechselrichter 22 beziehungsweise, falls ein Filter 64 vorhanden ist, am Filter 64 eine elektrische Last 66, insbesondre eine elektrische Maschine angeschlossen.

Die genannten bidirektionalen Halbleiterschalter mit gesteuerter unidirektionaler Stromführungsrichtung sind jeweils durch einen IGBT mit antiparalleler Diode ausgeführt. Anstelle dieser Ausführung kann ein bidirektionaler Halbleiterschalter mit gesteuerter unidirektionaler Stromführungsrichtung auch wie folgt ausgebildet sein, beispielsweise ein IGCT mit antiparalleler Diode.

Die Durchlassrichtung der Dioden des ersten Halbleiterschalters 31, des zweiten Halbleiterschalters 32, des dritten Halbleiterschalters 33, des vierten Halbleiterschalters 34, des fünften Halbleiterschalters 35 und des sechsten Halbleiterschalters 36 jedes Phasenmoduls 24, 26, 28 ist jeweils zum positiven Spannungspotential +V_{DC} hin, die Durchlassrichtung der Diode des siebten Halbleiterschalters 37 ist zum vierten Sternpunkt 44 hin und die Durchlassrichtung der Diode des achten Halbleiterschalters 38 ist vom dritten Sternpunkt 43 weg gerichtet.

Der erfindungsgemässe Umrichter 10 wird wie folgt betrieben.

Um den zunächst entladenen ersten Energiespeicher 16 und den ebenfalls zunächst entladenen zweiten Energiespeicher 18 zu laden, wird prinzipiell nur dasjenige Phasenmodul benötigt, welches über den Phasenleiter direkt mit der Energieversorgung 60 verbunden ist. Prinzipiell könnte die Energieversorgung 60 mit dem Phasenleiter Lu, dem Phasenleiter Lv oder dem Phasenleiter Lw verbunden sein. Im vorliegenden Ausführungsbeispiel wurde der Phasenleiter Lu und das Phasenmodul 24 gewählt. Ebenso wird nur dieses Phasenmodul 24 benötigt, um den weiteren Energiespeicher 50 zu laden. Die folgenden Ausführungen beziehen sich, sofern nichts anderes gesagt, nur auf das Phasenmodul 24, welches den Phasenleiter Lu aufweist und mit der Energieversorgung 60 direkt verbunden ist. Die weiteren Phasenmodule 26, 28 sind folglich zunächst optional.

Um den ersten Energiespeicher 16 und den zweiten Energiespeicher 18 zu laden werden zunächst alle Halbleiterschalter 31, 32, 33, 34, 35, 36, 37, 38 geöffnet, sodass im Phasenmodul 24 kein Strom fliessen kann. Weiter wird der Schalter 62 geschlossen. Folglich kann ein Strom von der Energieversorgung 60 über den Phasenleiter Lu zum ersten Sternpunkt 41 fliessen und über den fünften Halbleiterschalter 35, den zweiten Halbleiterschalter 32 und den dritten Halbleiterschalter 33 zum ersten Energiespeicher 16. Weiter fliesst der Strom durch den ersten Energiespeicher 16 zurück zur Energieversorgung 60, wodurch der erste Energiespeicher 16 geladen wird. Weiter kann ein Strom von der Energieversorgung 60 durch den zweiten Energiespeicher 18, den vierten Halbleiterschalter 34, den ersten Halbleiterschalter 31 und den sechsten Halbleiterschalter 36 zum ersten Sternpunkt 41 und von dort über den Phasenleiter Lu zurück zur Energieversorgung 60 fliessen, wodurch der zweite Energiespeicher 18 geladen wird. Folglich kann der erste Energiespeicher 16 und der zweite Energiespeicher 18 effizient mittels der zwischen dem Mittelpunktanschluss NP und dem Phasenleiter Lu angeschlossenen Energieversorgung 60 geladen werden. Vorteilhaft erweist sich, dass durch die Energieversorgung 60 zwischen dem Mittelpunktanschluss NP und dem Phasenleiter Lu eine Wechselspannung anliegt.

Erfindungswesentlich bei der obigen Schaltung sind folglich die in den Halbleiterschaltern enthaltenen Dioden, insbesondere ist es wesentlich, dass zumindest eine erste Diode 35' zwischen dem Phasenleiter Lu und dem positiven Potentialanschluss +V_{DC} derart angeordnet ist, dass ein Strom vom Phasenleiter Lu über die erste Diode 35' zum positiven Potentialanschluss +V_{DC} fliessen kann. Weiter ist es wesentlich, dass zumindest eine zweite Diode 36' zwischen dem negativen Potentialanschluss -V_{DC} und dem Phasenleiter Lu derart angeordnet ist, dass ein Strom vom negativen Potentialanschluss -V_{DC} zum Phasenleiter Lu fliessen kann. Die erste Diode 35' beziehungsweise deren Funktionalität kann beispielsweise durch den fünften Halbleiterschalter 35 und die zweite Diode 36' beziehungsweise deren Funktionalität kann beispielsweise durch den sechsten Halbleiterschalter 36 bereitgestellt werden. Anstelle einer Diode können auch mehrere Dioden in Serie zueinander und in derselben Durchgangsrichtung zueinander angeordnet werden.

Um den weiteren Energiespeicher 50 mittels der Energieversorgung 60 zu laden, wird der erste Halbeiterschalter 31 und/oder der zweite Halbleiterschalter 32 geschlossen. Bevorzugt wird der erste Halbleiterschalter 31 und/oder der zweite Halbleiterschalter 32 geschlossen bevor der Schalter 62 geschlossen wird, sodass beim Aufladen des ersten Energiespeichers 16, des zweiten Energiespeichers 18 und des weiteren Energiespeichers 50 die jeweiligen Spannungen miteinander ansteigen. Sobald die gewünschte Spannung im weiteren Energiespeicher 50 erreicht ist, wird der erste Halbleiterschalter 31 und der zweiten Halbleiterschalter 32 geöffnet. Falls gewünscht, was typischerweise der Fall ist, kann die Spannung im ersten Energiespeicher 16 und im zweiten Energiespeicher 18 wie oben beschrieben weiter erhöht werden.

Falls der erste Halbeiterschalter 31 geschlossen ist, kann ein Strom von der Energieversorgung 60 über den ersten Sternpunkt 41 zum zweiten Sternpunkt 42 fliessen. Vom zweiten Sternpunkt 42 fliesst der Strom über den weiteren Energiespeicher 50 und den ersten Halbleiterschalter 31 zum dritten Sternpunkt 43 und zurück über den Mittelpunktanschluss NP zur Energieversorgung 60. Zwischen dem dritten Sternpunkt 43 und dem Mittelpunktanschluss NP ist eine dritte Diode 38' angeordnet, die beispielsweise durch den achten Halbleiterschalter 38 realisiert sein kann. Die Durchlassrichtung der dritten Diode 38' ist derart gewählt, dass der Strom vom dritten Sternpunkt 43 zum Mittelpunktanschluss NP fliessen kann.

Falls der zweite Halbeiterschalter 32 geschlossen ist, kann ein Strom von der Energieversorgung 60 über den vierten Sternpunkt 44 und durch den geschlossenen zweiten Halbleiterschalter 32 zum zweiten Sternpunkt 42 fliessen. Weiter fliesst der Strom vom zweiten Sternpunkt 42 über den weiteren Energiespeicher 50 zum fünften Sternpunkt 45 und weiter über den ersten Sternpunkt 41 zur Energieversorgung 60 zurück. Zwischen dem vierten Sternpunkt 44 und dem Mittelpunktanschluss NP ist eine vierte Diode 37' angeordnet, die beispielsweise durch den sieben Halbleiterschalter 37 realisiert sein kann. Die Durchlassrichtung der vierten Diode 37' ist derart gewählt, dass der Strom vom Mittelpunktanschluss NP zum vierten Sternpunkt 44 fliessen kann.

Folglich wird der weitere Energiespeicher 50 geladen.

Der erste Halbleiterschalter 31 und der zweite Halbleiterschalter 32 werden geöffnet sobald der weitere Energiespeicher 50 die gewünschte Spannung erreicht hat. Weiter wird der Schalter 62 geöffnet, sobald der erste Energiespeicher 16 und der zweite Energiespeicher 18 die gewünschten Spannungen erreicht haben.

Typischerweise weist, wie in Fig. 2 gezeigt, der Umrichter neben dem Phasenmodul 24 für die Phase u weitere Phasenmodule 26, 28 für die Phasen v, w auf, wobei diese gleich zum oben beschriebenen Phasenmodul 24 für die Phase u ausgebildet sind und somit insbesondere weitere Energiespeicher 50 aufweisen. Die weiteren Energiespeicher 50 der weiteren Phasenmodule 26, 28 werden gleichzeitig wie der weitere Energiespeicher 50 des Phasenmoduls 24 geladen. Der Ladevorgang der weiteren Energiespeicher 50 der Phasenmodule 24, 26, 28 findet gleichzeitig statt.

Der weitere Energiespeicher 50 des Phasenmoduls 26 zur Phase v wird wie folgt geladen.

Um den weiteren Energiespeicher 50 des Phasenmoduls 26 zur Phase v zu laden, werden im Phasenmodul 26 der dritte Halbeiterschalter 33, der zweite Halbleiterschalter 32, der erste Halbleiterschalter 31 und der vierte Halbeiterschalter 34 geschlossen. Folglich ist im Phasenmodul 26 ein Strompfad vom positiven Potentialanschluss +V_{DC} durch den dritten Halbleiterschalter 33, den zweiten Halbeiterschalter 32, den weiteren Energiespeicher 50, den ersten Halbleiterschalter 31 und den vierten Halbleiterschalter 34 ausgebildet und der weitere Energiespeicher 50 wird parallel zum Gleichspannungszwischenkreis 14 geladen. Sobald der weitere Energiespeicher 50 geladen ist, wird zumindest einer und bevorzugt alle Halbeiterschalter 31, 32, 33, 34, die vorhin geschlossen wurden, wieder geöffnet.

Falls der Umrichter weitere Phasenmodule, insbesondere das Phasenmodul 28 zur Phase w aufweist, wird der weitere Energiespeicher 50 in dem bzw. den jeweiligen Phasenmodulen analog und gleichzeitig zum weiteren Energiespeicher 50 im Phasenmodul 26 zur Phase v aufgeladen.

Im Weiteren wird beschrieben, wie eine Ladungserhaltung des ersten Energiespeichers 16 und des zweiten Energiespeichers 18 des Gleichspannungszwischenkreises 14 wie auch der weiteren Energiespeicher 50 in den Phasenmodulen 24, 26, 28 erfolgt.

Die Ladung des ersten Energiespeichers 16 und des zweiten Energiespeichers 18 des Gleichspannungszwischenkreises 14 wird typischerweise mittels des Gleichrichters 12 aufrecht erhalten, könnte aber auch wie oben beschreiben mit der Energieversorgung 60 aufgeladen beziehungsweise aufrecht erhalten werden. Es wird wiederum davon ausgegangen, dass alle Halbleiterschalter zunächst geöffnet sind.

Bei geöffnetem Schalter 62, werden in einem ersten Phasenmodul 24' und einem zweiten Phasenmodul 26' der Phasenmodule 24, 26, 28 des Umrichters 10 folgende Halbeiterschalter geschlossen. Im ersten Phasenmodul 24', beispielsweise im Phasenmodul 24 zur Phase u, wird der dritte Halbeiterschalter 33 und der zweite Halbeiterschalter 32 geschlossen, wobei die weitern Halbleiterschalter des ersten Phasenmoduls 24' geöffnet bleiben. Im zweiten Phasenmodul 26', beispielsweise im Phasenmodul 26 zur Phase v, wird der erste Halbleiterschalter 31 und der vierte Halbeiterschalter 34 geschlossen, wobei die weiteren Halbleiterschalter des zweiten Phasenmoduls 26' geöffnet bleiben. Weiter wird im Folgenden davon ausgegangen, dass der Phasenleiter Lu mit dem Phasenleiter Lv verbunden ist, beispielsweise über eine Induktivität einer elektrischen Maschine 66 oder auch durch einen geeigneten Strompfad in einem allenfalls vorhandenen Filter 64. Folglich ist der folgende Strompfad ausgebildet. Vom positiven Potentialanschluss +V_{DC} führt der Strompfad im ersten Phasenmodul 24' über den dritten Halbleiterschalter 33 und den zweiten Halbleiterschalter 32 über den weiteren Energiespeicher 50 zum fünften Sternpunkt 45 und über die zweite Diode 36' zum Phasenleiter Lu. Über den Phasenleiter Lu und den Phasenleiter Lv führt der Strompfad zum zweiten Phasenmodul 26'. Im zweiten Phasenmodul 26' führt der Strompfad vom ersten Sternpunkt 41 über die erste Diode 35' zum zweiten Sternpunkt 42 und von diesem über den weiteren Energiespeicher 50, den ersten Halbleiterschalter 31 und den vierten Halbleiterschalter 34 zum negativen Potentialanschluss -V_{DC}. Folglich kann durch den beschriebenen Strompfad ein Strom durch den weiteren Energiespeicher 50 des ersten Phasenmoduls 24' wie auch durch den weiteren Energiespeicher 50 des zweiten Phasenmoduls 26' fliessen, wodurch diese geladen werden. Sobald die weiteren Energiespeicher 50 des ersten Phasenmoduls 24' und des zweiten Phasenmoduls 26' die gewünschte Spannung erreicht haben, wird der Strompfad geöffnet.

Auf analoge Weise können auch die weiteren Energiespeicher 50 des Phasenmoduls 26 zur Phase v und des Phasenmoduls 28 zur Phase w aufgeladen werden. Ebenso können die weiteren Energiespeicher 50 des Phasenmoduls 28 zur Phase w und des Phasenmoduls 24 zur Phase u aufgeladen werden.

In einer weiteren Ausführungsform der Erfindung ist der Gleichrichter anstelle durch den oben beschriebenen Diodengleichrichter durch einen aktiven Gleichrichter ausgebildet. Dieser weist beispielsweise für jede Phase ein Phasenmodul auf, wie es in Fig. 3 gezeigt ist. Die Phasenleiter der Phasenmodule werden mit an den in Fig. 1 gezeigten Transformator 13 angeschlossen. Gleichspannungsseitig, werden die Phasenmodule an den Gleichspannungszwischenkreis 14 angeschlossen. Der Ladevorgang für das Aufladen der weiteren Energiespeicher 50 in den Phasenmodulen des aktiven Gleichrichters erfolgt analog zum Aufladen des weiteren Energiespeichers 50 im Phasenmodul 26 für die Phase v.

### Bezugszeichenliste

- 10: Umrichter
- 12: Gleichrichter
- 13: Transformator
- 14: Gleichspannungszwischenkreis
- 15: Versorgungsnetz
- 16: erster Energiespeicher
- 18: zweiter Energiespeicher
- 22: Wechselrichter
- 24: Phasenmodul für die Phase u
- 24': erstes Phasenmodul
- 26: Phasenmodul für die Phase v
- 26': zweites Phasenmodul
- 28: Phasenmodul für die Phase w
- 31: erster Halbleiterschalter
- 32: zweiter Halbleiterschalter
- 33: dritter Halbleiterschalter
- 34: vierter Halbleiterschalter
- 35: fünfter Halbleiterschalter
- 35': erste Diode
- 36: sechster Halbleiterschalter
- 36': zweite Diode
- 37: siebter Halbleiterschalter
- 37': vierte Diode
- 38: achte Halbleiterschalter
- 38': dritte Diode
- 41: erster Sternpunkt
- 42: zweiter Sternpunkt
- 43: dritter Sternpunkt
- 44: vierter Sternpunkt
- 45: fünfter Sternpunkt
- 50: weiterer Energiespeicher
- 60: Energieversorgung
- 62: Schalter
- 64: Filter
- 66: Last
- +V_{DC}: positiver Potentialanschluss
- -V_{DC}: negativer Potentialanschluss
- NP: Mittelpunktanschluss
- u, v, w: Phasen
- Lu: Phasenleiter zur Phase u
- Lv: Phasenleiter zur Phase v
- Lw: Phasenleiter zur Phase w

## Patentansprüche

1. Umrichter mit einem Gleichspannungszwischenkreis (14) und zumindest einem mit dem Gleichspannungszwischenkreis (14) elektrisch verbundenen Phasenmodul (24) mit einem davon abgehenden Phasenleiter (Lu),
wobei der Gleichspannungszwischenkreis (14) einen positiven Potentialanschluss (+V_{DC}), einen negativen Potentialanschluss (-V_{DC}) und einen Mittelpunktanschluss (NP) aufweist und zwischen dem positiven Potentialanschluss (+V_{DC}) und dem Mittelpunktanschluss (NP) ein erster Energiespeicher (16) und zwischen dem Mittelpunktanschluss (NP) und dem negativen Potentialanschluss (-V_{DC}) ein zweiten Energiespeicher (18) angeschlossen ist,
wobei der Phasenleiter (Lu) über eine erste Diode (35') mit dem positiven Potentialanschluss (+V_{DC}), und über ein zweite Diode (36') mit dem negativen Potentialanschluss (-V_{DC}) verbunden ist, **dadurch gekennzeichnet, dass** der Umrichter weiter eine Energieversorgung (60) zum Aufladen des ersten Energiespeichers (16) und des zweiten Energiespeichers (18) aufweist, welche Energieversorgung (60) einerseits mit dem Mittelpunktanschluss (NP) und andererseits mit dem Phasenleiter (Lu) über einen Schalter (62) verbunden ist.

2. Umrichter nach Anspruch 1, **dadurch gekennzeichnet, dass** die Energieversorgung (60) ein Transformator ist, auf seiner sekundären Seite einphasig ausgebildet ist und auf seiner primären Seite mit einem Versorgungsnetz verbindbar ist.

3. Umrichter nach Anspruch 1 oder 2, **dadurch gekennzeichnet, dass** in einem ersten Stromkreis der erste Energiespeicher (16) über den Mittelpunktanschluss (NP) mit der Energieversorgung (60), diese über den Phasenleiter (Lu) mit der erste Diode (35') und diese erste Diode (35') mit dem positiven Potentialanschluss (+V_{DC}) in Serie verbunden sind, und dass in einem zweiten Stromkreis der zweite Energiespeicher (18) über den negative Potentialanschluss (-V_{DC}) mit der zweiten Diode (36') und diese zweite Diode (36') über den Phasenleiter (Lu) mit der Energieversorgung (60) in Serie verbunden sind.

4. Umrichter nach einem der Ansprüche 1 bis 3, **dadurch gekennzeichnet, dass** die erste Diode (35') durch einen bidirektionalen Halbleiterschalter (35) mit gesteuerter unidirektionaler Stromführungsrichtung ausgebildet ist, und/oder die zweite Diode (36') durch einen bidirektionalen Halbleiterschalter (36) mit gesteuerter unidirektionaler Stromführungsrichtung ausgebildet ist.

5. Umrichter nach einem der Ansprüche 1 bis 4, **dadurch gekennzeichnet, dass** das zumindest eine Phasenmodul (24) einen dem Phasenmodul (24) zugeordnete, weiteren Energiespeicher (50) aufweist, welcher einerseits über einen zweiten, bidirektionalen Halbleiterschalter (32) mit gesteuerter unidirektionaler Stromführungsrichtung mit dem Mittelpunktanschluss (NP) und über die erste Diode (35') mit dem Phasenleiter (Lu) verbunden ist und andererseits über einen ersten, bidirektionalen Halbleiterschalter (31) mit gesteuerter unidirektionaler Stromführungsrichtung mit dem Mittelpunktanschluss (NP) und über die zweite Diode (36') mit dem Phasenleiter (Lu) verbunden ist.

6. Umrichter nach Anspruch 5, **dadurch gekennzeichnet, dass** der dem Phasenmodul (24) zugeordnete, weitere Energiespeicher (50) in einem dritten Stromkreis in Serie mit dem ersten, bidirektionalen Halbleiterschalter (31), der Energieversorgung (60) und der ersten Diode (35') angeschlossen ist, und dass in einem vierten Stromkreis der weitere Energiespeicher (50) in Serie mit der zweiten Diode (36'), der Energieversorgung (60) und dem zweiten, bidirektionalen Halbleiterschalter (32) angeschlossen ist.

7. Verfahren zum Betreiben eines Umrichters, insbesondere nach einem der Ansprüche 1 bis 6, mit einem Gleichspannungszwischenkreis (14) und einem mit dem Gleichspannungszwischenkreis (14) elektrisch verbundenen Phasenmodul (24) mit einem davon abgehenden Phasenleiter (Lu),
wobei der Gleichspannungszwischenkreis (14) zumindest einen positiven Potentialanschluss (+V_{DC}), einen negative Potentialanschluss (-V_{DC}) und einen Mittelpunktanschluss (NP) aufweist und zwischen dem positiven Potentialanschluss (+V_{DC}) und dem Mittelpunktanschluss (NP) ein ersten Energiespeicher (14) und zwischen dem Mittelpunktanschluss (NP) und dem negativen Potentialanschluss (-V_{DC}) einen zweiten Energiespeicher (18) aufweist,
wobei der Phasenleiter (Lu) über eine erste Diode (35') mit dem positiven Potentialanschluss (+V_{DC}), und über eine zweite Diode (36') mit dem negativen Potentialanschluss (-V_{DC}) verbunden ist, **dadurch gekennzeichnet, dass** der Umrichter weiter eine Energieversorgung (60) aufweist, welche einerseits mit dem Mittelpunktanschluss (NP) und andererseits mit dem Phasenleiter (Lu) über einen Schalter (62) verbindbar ist, und dass das Verfahren folgende Schritte umfasst
- Beaufschlagen der Energieversorgung (60) mit einer Wechselspannung,
- Schliessen des Schalters (62),
- Aufladen des ersten Energiespeichers (16) mit einer ersten Halbwelle des Stroms der Energieversorgung (60) und
- Aufladen des zweiten Energiespeichers (18) mit einer zweiten Halbwelle des Stroms der Energieversorgung (60).

8. Verfahren nach Anspruch 7, **dadurch gekennzeichnet, dass** das Phasenmodul (24) einen dem Phasenmodul (24) zugehörigen weiteren Energiespeicher (50) aufweist, der einerseits über die erste Diode (35') mit dem Phasenleiter (Lu) und über einen zweiten Halbleiterschalter (32) mit gesteuert unidirektionaler Stromführungsrichtung mit dem Mittelpunktanschluss (NP) verbunden ist und andererseits über die zweite Diode (36') mit dem Phasenleiter (Lu) und über einen ersten Halbleiterschalter (31) mit gesteuert unidirektionaler Stromführungsrichtung mit dem Mittelpunkanschluss (NP) verbunden ist, wobei das Verfahren folgende weitere Schritte aufweist
- Schliessen zumindest eines des ersten Halbleiterschalters (31) und des zweiten Halbleiterschalters (32)
- Aufladen des zum Phasenmodul (24) zugehörigen weiteren Energiespeichers (50) mittels der Energieversorgung (60).

9. Verfahren nach Anspruch 8, **dadurch gekennzeichnet, dass** das Aufladen des zum Phasenmodul (24) zugehörigen weiteren Energiespeichers (50) parallel zum Aufladen des ersten Energiespeichers (16) und des zweiten Energiespeichers (18) erfolgt.

10. Verfahren nach Anspruch 8 oder 9, **gekennzeichnet durch**
- Schliessen des ersten Halbleiterschalters (31) und des zweiten Halbleiterschalters (32), und
- Aufladen des zum Phasenmodul (24) zugehörigen weiteren Energiespeichers (50) mittels der positive und negativen Halbwelle der Energieversorgung (60).

11. Verfahren nach einem der Ansprüche 7 bis 10, **dadurch gekennzeichnet, dass** das zumindest eine Phasenmodul (24) ein erstes Phasenmodul (24') ist und der Umrichter (10) ein zweites Phasenmodul (26') aufweist, wobei das zweite Phasenmodul (26') einen dem zweiten Phasenmodul (26') zugehörigen, weiteren Energiespeicher (50) aufweist, der einerseits über eine erste Diode (35') des zweiten Phasenmoduls (26') mit einem weiteren Phasenleiter (Lv) und über einen zweiten Halbleiterschalter (32) mit gesteuert unidirektionaler Stromführungsrichtung des zweiten Phasenmoduls (26') mit dem positiven Potentialanschluss (+V_{DC}) verbunden ist und andererseits über eine zweite Diode (36') des zweiten Phasenmoduls (26') mit dem weiteren Phasenleiter (Lv) und über einen ersten Halbleiterschalter (31) mit gesteuert unidirektionaler Stromführungsrichtung des zweiten Phasenmoduls (26') mit dem negativen Potentialanschluss (-V_{DC}) verbunden ist, wobei das Verfahren folgende weitere Schritte aufweist
- Schliessen des ersten Halbleiterschalters (31) des zweiten Phasenmoduls (26') und des zweiten Halbleiterschalters (32) des zweiten Phasenmoduls (26')
- Aufladen des zum zweiten Phasenmodul (26') zugehörigen weiteren Energiespeichers (50).

12. Verfahren nach Anspruch 11, **dadurch gekennzeichnet, dass** das Aufladen des zum zweiten Phasenmodul (26') zugehörigen weiteren Energiespeichers (50) parallel zum Aufladen des ersten Energiespeichers (16) und des zweiten Energiespeichers (18) erfolgt.

13. Verfahren nach Anspruch 11 oder 12 **gekennzeichnet durch**,
- Verbinden des ersten Phasenleiters (Lu) mit dem zweiten Phasenleiter (Lv, Lw),
- Öffnen des ersten Halbleiterschalters (31) des ersten Phasenmoduls (24'),
- Öffnen des zweiten Halbleiterschalters (32) des zweiten Phasenmoduls (26'),
- Schlissen des zweiten Halbeiterschalters (32) des ersten Phasenmoduls (24'),
- Schlissen des ersten Halbeiterschalters (31) des zweiten Phasenmoduls (26'),
- Aufladen des weiteren Energiespeichers (50) des ersten Phasenmoduls (24') und des weiteren Energiespeichers (50) des zweiten Phasenmoduls (26').

14. Verfahren nach Anspruch 13, **gekennzeichnet durch**
Verbinden des ersten Phasenleiters (Lu) mit dem zweiten Phasenleiter (Lv) über eine Induktion.
